# EUROPEAN PATENT APPLICATION

(11) **EP 4 216 326 A1**
(43) Date of publication of application: **26.07.2023**
(21) Application number: 21950538.5
(22) Date of filing: 23.07.2021
(51) Int. Cl.: H01M 10/04, H01M 10/0525

(54) **BATTERY ASSEMBLY AND PROCESSING METHOD AND APPARATUS, BATTERY CELL, BATTERY AND ELECTRIC DEVICE**

(71) Applicant: Contemporary Amperex Technology Co., Limited, Fujian PRC 352100 (CN)
(72) Inventor: NI, Jun, Ningde, Fujian 352100 (CN); ZHAO, Fenggang, Ningde, Fujian 352100 (CN); ZHANG, Shengwu, Ningde, Fujian 352100 (CN); TANG, Minghao, Ningde, Fujian 352100 (CN); LIN, Wenfa, Ningde, Fujian 352100 (CN); YE, Jie, Ningde, Fujian 352100 (CN)
(74) Representative: Rowlands, Stuart Michael
(86) International application number: PCT/CN2021/108057
(87) International publication number: WO 2023/000289

(57) **Abstract**

Provided in the present application are an electrode assembly and a processing method and apparatus, a battery cell, a battery, and an electric device. The electrode assembly comprises: a cathode electrode sheet, an anode electrode sheet, and an isolation member, where the isolation member is used for isolating the cathode electrode sheet from the anode electrode sheet; and a closed-hole part is provided in part of a region of the isolation member, and the closed-hole part is used for blocking at least a portion of ions, which are separated from the cathode electrode sheet located on one side of the closed-hole part, from being embeddedd into the anode electrode sheet located on another side of the closed-hole part. By means of heating an isolation member to form a closed-hole part, the occurrence of lithium precipitation can be reduced.

## Description

### Technical Field

The present application relates to the field of batteries, and in particular to an electrode assembly and a processing method and apparatus therefor, a battery cell, a battery, and a power consuming apparatus.

### Background Art

A rechargeable battery, which may be referred to as a secondary battery, is a battery that can be charged to activate an active material for further use after the battery is discharged. Rechargeable batteries are widely used in electronic devices, such as mobile phones, laptops, electric scooters, electric vehicles, electric aircrafts, electric ships, electric toy cars, electric toy ships, electric toy aircrafts, and power tools.

Rechargeable batteries may include a nickel-cadmium battery, a nickel-hydrogen battery, a lithium-ion battery, a secondary alkaline zinc-manganese battery, etc.

At present, batteries most used in vehicles are usually lithium-ion batteries. As a rechargeable battery, a lithium-ion battery has the advantages of small size, high energy density, high power density, long cycle life, long storage time, etc.

The rechargeable battery includes an electrode assembly and an electrolyte solution. The electrode assembly includes a cathode plate, an anode plate, and a separator located between the cathode plate and the anode plate. The cathode plate may also be referred to as a cathode. Both surfaces of the cathode plate have a cathode active material layer thereon. For example, a cathode active material of the cathode active material layer may be lithium manganate, lithium cobaltate, lithium iron phosphate, or lithium nickel-cobalt manganate. The anode plate may also be referred to as an anode. Both surfaces of the anode plate have an anode active material layer thereon. For example, an anode active material of the anode active material layer may be graphite or silicon.

Lithium precipitation is a common problem in lithium batteries, which affects the charging efficiency and energy density of lithium ions. Severe lithium precipitation may even cause lithium crystallization, which can pierce the separator, causing thermal runaway and internal short circuit, which seriously jeopardizes the safety of the battery.

Therefore, how to reduce or avoid lithium precipitation and improve battery safety has become a challenge in the industry.

### Summary of the Invention

Various aspects of the present application provide an electrode assembly and a processing method and apparatus therefor, a battery cell, a battery, and a power consuming apparatus, which overcome or at least partially solve the problem mentioned above.

A first aspect of the present application provides an electrode assembly, including: a cathode plate, an anode plate, and a separator, where the separator is configured to separate the cathode plate from the anode plate, a closed-pore portion is provided in part of the region of the separator, and the closed-pore portion is configured to block at least some ions de-intercalated from the cathode plate located on one side of the closed-pore portion from being intercalated into the anode plate located on the other side of the closed-pore portion.

In this embodiment, the closed-pore portion is provided in the part of region of the separator, and the closed-pore portion corresponds to a part of the anode plate where lithium precipitation is prone to occur. During charging, the at least some ions de-intercalated from the cathode plate are blocked by the closed-pore portion, so that the ions blocked by the closed-pore portion cannot be intercalated into the anode plate adjacent to the cathode plate, thereby reducing the occurrence of lithium precipitation in the part of the anode plate where lithium precipitation is prone to occur, improving the safety performance of the battery cell, and prolonging the service life of the battery cell. Forming the closed-pore portion in the part of region of the separator facilitates production and processing, thereby improving the production efficiency.

In some embodiments, the closed-pore portion is formed by heating the part of region of the separator. The separator is heated such that pore closing occurs on the separator, and inner space of the separator is blocked, which blocks a movement channel of cathode lithium ions, thereby reducing the occurrence of lithium precipitation in the anode plate. Heating the separator to form the closed-pore portion facilitates production and processing, thereby improving the production efficiency.

In some embodiments, the cathode plate, the separator, and the anode plate are wound to form a bent region, and at least part of the closed-pore portion is provided on the separator in the bent region.

In this embodiment, during charging, lithium precipitation is prone to occur in the bent region. By providing the at least part of the closed-pore portion on the separator in the bent region, the at least some ions de-intercalated from the cathode plate in the bent region are blocked by the closed-pore portion, so that the ions blocked by the closed-pore portion cannot be intercalated into the anode plate adjacent to the cathode plate, thereby reducing the occurrence of lithium precipitation in the bent region, improving the safety performance of the battery cell, and prolonging the service life of the battery cell.

In some embodiments, at least part of the closed-pore portion is provided at a bent part of the separator that is adjacent to a first-bent part of the cathode plate, and/or at least part of the closed-pore portion is provided at a bent part of the separator that is adjacent to a second-bent part of the cathode plate.

In this embodiment, during charging, the cathode plate with a cathode first-bent part and a cathode second-bent part adjacent to each other are prone to lithium precipitation. The at least part of the closed-pore portion is provided at the bent part of the separator that is adjacent to the first-bent part of the cathode plate, and/or the at least part of the closed-pore portion is provided at the bent part of the separator that is adjacent to the second-bent part of the cathode plate. At least some ions de-intercalated from a cathode active material layer at the cathode first-bent part and the cathode second-bent part are blocked by the closed-pore portion, so that the ions blocked by the closed-pore portion cannot be intercalated into an anode active material layer of the anode plate, in the bent region, that is adjacent to the cathode plate. This can reduce the occurrence of lithium precipitation in the cathode plate with the cathode first-bent part and the cathode second-bent part adjacent to each other, improve the safety performance of the battery cell, and prolong the service life of the battery cell.

A second aspect of the present application provides a processing method for an electrode assembly, the electrode assembly including a cathode plate, an anode plate, and a separator. The separator is configured to separate the cathode plate from the anode plate. The electrode assembly is formed by winding the cathode plate, the separator, and the anode plate. The processing method includes: heating a preset part of the separator to form a closed-pore portion at the preset part; and winding the cathode plate, the anode plate, and the separator to form an electrode assembly, where the closed-pore portion is located between the cathode plate and the anode plate adjacent to each other after the winding, and the closed-pore portion is configured to block at least some ions de-intercalated from the cathode plate located on one side of the closed-pore portion from being intercalated into the anode plate located on the other side of the closed-pore portion.

In this embodiment, the closed-pore portion is provided in the part of region of the separator, and the closed-pore portion after the winding corresponds to a part of the anode plate where lithium precipitation is prone to occur. During charging, the at least some ions de-intercalated from the cathode plate are blocked by the closed-pore portion, so that the ions blocked by the closed-pore portion cannot be intercalated into the anode plate adjacent to the cathode plate, thereby reducing the occurrence of lithium precipitation in the part of the anode plate where lithium precipitation is prone to occur, improving the safety performance of the battery cell, and prolonging the service life of the battery cell. Forming the closed-pore portion in the part of region of the separator facilitates production and processing, thereby improving the production efficiency.

In some embodiments, before the step of heating a preset part of the separator, the method further includes: determining position information of the preset part based on a preset post-winding position, where the preset post-winding position is a position of the closed-pore portion in the electrode assembly after the winding, and is located between the cathode plate and the anode plate adjacent to each other, and the position information of the preset part includes information for characterizing a start position and an end position of the closed-pore portion; winding the cathode plate, the anode plate, and the separator that has not been heated; obtaining winding data of the cathode plate, the separator, and the anode plate, and determining heating information based on the winding data and the position information of the preset part; and obtaining a heating temperature for heating the preset part of the separator; and then the heating a preset part of the separator includes: heating the preset part of the separator based on the heating information and the heating temperature.

In this embodiment, the position information of the preset part is determined based on the preset post-winding position, the winding data is obtained, the heating information is determined based on the winding data and the position information of the preset part, and then the preset part of the separator is heated based on the heating information, which can automatically implement the processing of the closed-pore portion. The formation of the closed-pore portion can be performed simultaneously with a winding action.

In some embodiments, the winding data includes a winding linear velocity of the separator, the position information of the preset part includes a start point length and an end point length of the closed-pore portion, and the heating information includes a heating start time and a heating end time.

In this embodiment, the heating start time and the heating end time may be determined based on the start point length and the end point length of the closed-pore portion and the winding linear velocity of the separator, and heating duration for the closed-pore portion is determined by using the heating start time and the heating end time, so that the closed-pore portion can be accurately formed through automatic heating.

In some embodiments, the winding data includes an overall winding angle θ of the cathode plate, the separator, and the anode plate, the position information of the preset part includes a start angle θ1 and an end angle θ2 of the closed-pore portion, and the heating information includes a heating start signal and a heating end signal.

In this embodiment, the heating start signal and the heating end signal may be determined based on the start angle θ1 and the end angle θ2 of the closed-pore portion and the overall winding angle θ of the cathode plate, the separator, and the anode plate, and the heating for the closed-pore portion is accurately controlled based on the heating start signal and the heating end signal, so that the closed-pore portion can be accurately formed through automatic heating.

In some embodiments, the cathode plate, the separator, and the anode plate are wound to form a bent region, and at least part of the preset post-winding position is provided on the separator in the bent region.

In this embodiment, during charging, lithium precipitation is prone to occur in the bent region. By providing the at least part of the closed-pore portion on the separator in the bent region, the at least some ions de-intercalated from the cathode plate in the bent region are blocked by the closed-pore portion, so that the ions blocked by the closed-pore portion cannot be intercalated into the anode plate adjacent to the cathode plate, thereby reducing the occurrence of lithium precipitation in the bent region, improving the safety performance of the battery cell, and prolonging the service life of the battery cell.

In some embodiments, at least part of the preset post-winding position is provided at a bent part of the separator that is adjacent to a first-bent part of the cathode plate, and/or at least part of the preset post-winding position is provided at a bent part of the separator that is adjacent to a second-bent part of the cathode plate.

In this embodiment, the cathode plate with a cathode first-bent part and a cathode second-bent part adjacent to each other are prone to lithium precipitation. The at least part of the closed-pore portion is provided at the bent part of the separator that is adjacent to the first-bent part of the cathode plate, and/or the at least part of the closed-pore portion is provided at the bent part of the separator that is adjacent to the second-bent part of the cathode plate. At least some ions de-intercalated from a cathode active material layer at the cathode first-bent part and the cathode second-bent part are blocked by the closed-pore portion, so that the ions blocked by the closed-pore portion cannot be intercalated into an anode active material layer of the anode plate, in the bent region, that is adjacent to the cathode plate. This can reduce the occurrence of lithium precipitation in the cathode plate with the cathode first-bent part and the cathode second-bent part adjacent to each other, improve the safety performance of the battery cell, and prolong the service life of the battery cell.

In some embodiments, the heating temperature for heating the preset part of the separator ranges from 90 degrees Celsius to 115 degrees Celsius. In this embodiment, the heating temperature is ranges from 90 degrees Celsius to 115 degrees Celsius, which can achieve a better pore closing effect and effectively block ions.

A third aspect of the present application provides a processing apparatus for an electrode assembly, the electrode assembly including a cathode plate, an anode plate, and a separator. The separator is configured to separate the cathode plate from the anode plate. The electrode assembly is formed by winding the cathode plate, the separator, and the anode plate. The processing apparatus includes: a heating mechanism configured to heat a preset part of the separator to form a closed-pore portion; and a winding mechanism configured to wind the cathode plate, the anode plate, and the separator to form the electrode assembly, the heating mechanism being located upstream of the winding mechanism, where the closed-pore portion is located between the cathode plate and the anode plate adjacent to each other after the winding, and the closed-pore portion is configured to block at least some ions de-intercalated from the cathode plate located on one side of the closed-pore portion from being intercalated into the anode plate located on the other side of the closed-pore portion.

In this embodiment, by providing the heating mechanism upstream of the winding mechanism, the closed-pore portion is formed at the preset part of the surface of the separator, and after the cathode plate, the separator, and the anode plate are wound to form the electrode assembly, the closed-pore portion corresponds to a part of the anode plate where lithium precipitation is prone to occur. The closed-pore portion may block at least some ions de-intercalated from the cathode plate located on one side of the closed-pore portion from being intercalated into the anode plate located on the other side of the closed-pore portion. During charging, at least some ions de-intercalated from the cathode plate are blocked by the closed-pore portion, so that the ions blocked by the closed-pore portion cannot be intercalated into the anode active material layer, thereby reducing the occurrence of lithium precipitation in the part of the anode plate where lithium precipitation is prone to occur, improving the safety performance of the battery cell, and prolonging the service life of the battery cell.

In some embodiments, a position information determination unit is configured to determine position information of the preset part based on a preset post-winding position, and send the position information to a heating information determination unit, where the preset post-winding position is a position of the closed-pore portion in the electrode assembly after the winding, and is located between the cathode plate and the anode plate adjacent to each other, and the position information of the preset part includes information for characterizing a start position and an end position of the closed-pore portion; a winding control unit is configured to control the winding mechanism to wind the cathode plate, the anode plate, and the separator; an obtaining unit is configured to obtain winding data of the cathode plate, the separator, and the anode plate, and send the winding data to the heating information determination unit; the heating information determination unit is configured to determine heating information based on the winding data and the position information of the preset part; a temperature sensor is configured to measure a temperature of the heating mechanism, and send the measured temperature to a heating control unit; and the heating control unit is configured to control, based on the heating information and the measured temperature, the heating mechanism to heat the preset part of the separator to form the closed-pore portion.

In this embodiment, the position information determination unit determines the position information of the preset part based on the preset post-winding position, the winding control unit controls the winding mechanism, the obtaining unit obtains the winding data, and the heating information determination unit determines the heating information based on the winding data and the position information of the preset part; the temperature sensor may be provided to measure a temperature of a heating portion, so that the heating control unit can accurately control the temperature of the heating mechanism to achieve a better pore closing effect; the heating control unit controls, based on the heating information and the measured temperature, the heating mechanism to heat the preset part of the surface of the separator to form the closed-pore portion, which can automatically implement the formation of the closed-pore portion. The formation of the closed-pore portion can be performed simultaneously with a winding action, which improves the production efficiency.

In some embodiments, the winding data includes a winding linear velocity V of the separator, the position information of the preset part includes a start point length L1 and an end point length L2 of the closed-pore portion, and the heating information includes a heating start time T1 and a heating end time T2.

In this embodiment, the heating start time and the heating end time may be determined based on the start point length and the end point length of the closed-pore portion and the winding linear velocity of the separator, and heating duration for the closed-pore portion may be determined by using the heating start time and the heating end time, so that the closed-pore portion can be accurately formed through automatic heating.

In some embodiments, the winding data includes an overall winding angle θ of the cathode plate, the separator, and the anode plate, the position information of the preset part includes a heating start angle θ1 and a heating end angle θ2 for the closed-pore portion, and the heating information includes a heating start signal and a heating end signal.

In this embodiment, the heating start signal and the heating end signal may be determined based on the heating start angle θ1 and the heating end angle θ2 for the closed-pore portion and the overall winding angle θ of the cathode plate, the separator, and the anode plate, and the heating for and the formation of the closed-pore portion may be accurately controlled based on the heating start signal and the heating end signal, so that the closed-pore portion can be accurately formed through automatic heating.

In some embodiments, the cathode plate, the separator, and the anode plate are wound to form a bent region, and at least part of the preset post-winding position is provided on the separator in the bent region.

In this embodiment, during charging, lithium precipitation is prone to occur in the bent region. By providing the at least part of the closed-pore portion on the separator in the bent region, the at least some ions de-intercalated from the cathode plate in the bent region are blocked by the closed-pore portion, so that the ions blocked by the closed-pore portion cannot be intercalated into the anode plate adjacent to the cathode plate, thereby reducing the occurrence of lithium precipitation in the bent region, improving the safety performance of the battery cell, and prolonging the service life of the battery cell.

In some embodiments, at least part of the preset post-winding position is provided at a bent part of the separator that is adjacent to a first-bent part of the cathode plate, and/or at least part of the preset post-winding position is provided at a bent part of the separator that is adjacent to a second-bent part of the cathode plate.

In this embodiment, during charging, the cathode and/or anode plate with a cathode and/or anode first-bent part and a cathode and/or anode second-bent part adjacent to each other are prone to lithium precipitation. The at least part of the closed-pore portion is provided at the bent part of the separator that is adjacent to the first-bent part of the cathode plate, and/or the at least part of the closed-pore portion is provided at the bent part of the separator that is adjacent to the second-bent part of the cathode plate. At least some ions de-intercalated from a cathode active material layer at the cathode first-bent part and the cathode second-bent part are blocked by the closed-pore portion, so that the ions blocked by the closed-pore portion cannot be intercalated into an anode active material layer of the anode plate, in the bent region, that is adjacent to the cathode plate. This can reduce the occurrence of lithium precipitation in the cathode plate with the cathode first-bent part and the cathode second-bent part adjacent to each other, improve the safety performance of the battery cell, and prolong the service life of the battery cell.

In some embodiments, the heating mechanism includes: a heating portion configured to heat the preset part of a surface of the separator to form the closed-pore portion; and a driving mechanism configured to drive the heating portion to approach or leave the separator, where the heating portion and the driving mechanism are communicatively connected to the heating control unit.

In this embodiment, the heating mechanism is provided to heat the preset part of the surface of the separator to form the closed-pore portion; the temperature sensor is configured to measure the temperature of the heating portion; and the driving mechanism is configured to drive the heating portion to approach or leave the separator, where the heating portion and the driving mechanism are communicatively connected to the heating control unit. The driving mechanism is controlled by the heating control unit to drive the heating portion to approach or leave the separator, and a heating position and a heating area can be controlled, so that the closed-pore portion can be accurately formed at the preset part of the surface of the separator.

In some embodiments, the heating portion is arranged on one side of the separator, or there are a plurality of the heating portions, which are respectively arranged on two sides of the separator.

In this embodiment, the closed-pore portion can be formed on the surface of one side or on the surfaces of two sides of the separator, by arranging the heating portion on one side or two sides of the separator.

In some embodiments, the heating portion includes a heating roller, and the heating roller is rotatably connected to the driving mechanism.

In this embodiment, the heating portion may be in the form of a heating roller. When the heating roller is in contact with the separator, the heating roller rolls along the surface of the separator to heat the separator to form a closed-pore portion.

In some embodiments, the heating temperature for heating the preset part of the separator ranges from 90 degrees Celsius to 115 degrees Celsius. In this embodiment, the heating temperature is ranges from 90 degrees Celsius to 115 degrees Celsius, which can achieve a better pore closing effect and effectively block ions.

A fourth aspect of the present application provides a battery cell, including: a shell, an electrolyte, a cover plate, and at least one electrode assembly in the embodiment according to the third aspect, where the shell has an accommodating cavity and an opening, and the electrode assembly and the electrolyte are accommodated in the accommodating cavity; and the cover plate is configured to seal the opening of the shell.

A fifth aspect of the present application provides a battery, including a case and at least one battery cell in the embodiment according to the fourth aspect, where the battery cell is accommodated in the case.

A sixth aspect of the present application provides a power consuming apparatus. The power consuming apparatus is configured to receive power provided by the battery in the embodiment according to the fifth aspect.

The aforementioned description is only an overview of the technical solutions of the embodiments of the present application. In order to more clearly understand the technical means of the embodiments of the present application to implement same according to the contents of the description, and in order to make the aforementioned and other objectives, features and advantages of the embodiments of the present application more obvious and understandable, specific embodiments of the present application are exemplarily described below.

### Brief Description of the Drawings

In order to more clearly illustrate the technical solutions in the embodiments of the present application, the drawings to be used in the description of the embodiments of the present application will be described briefly below. Obviously, the drawings in the following description show merely some embodiments of the present application. For those of ordinary skill in the art, other drawings can also be obtained according to these drawings without the inventive labor.
FIG. 1 is a schematic perspective view of a structure of an electrode assembly according to an embodiment of the present application;
FIG. 2 is a schematic structural diagram of a cross-section of the electrode assembly of

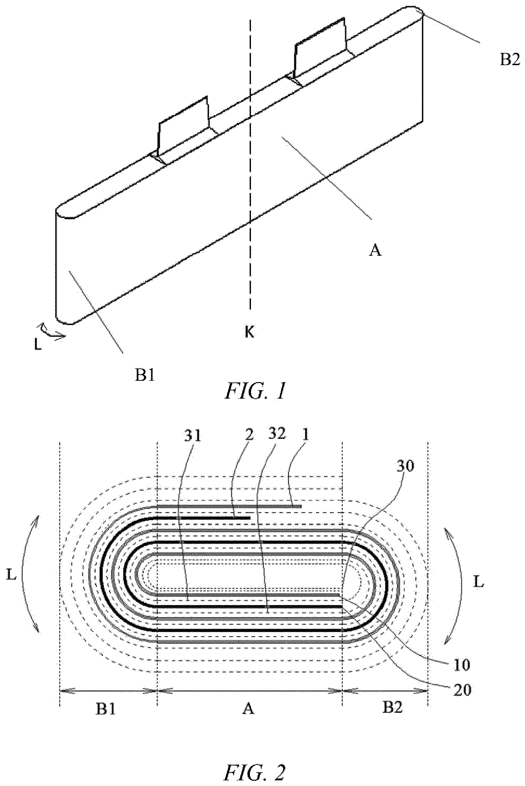

FIG. 1 in a direction perpendicular to a winding axis K;

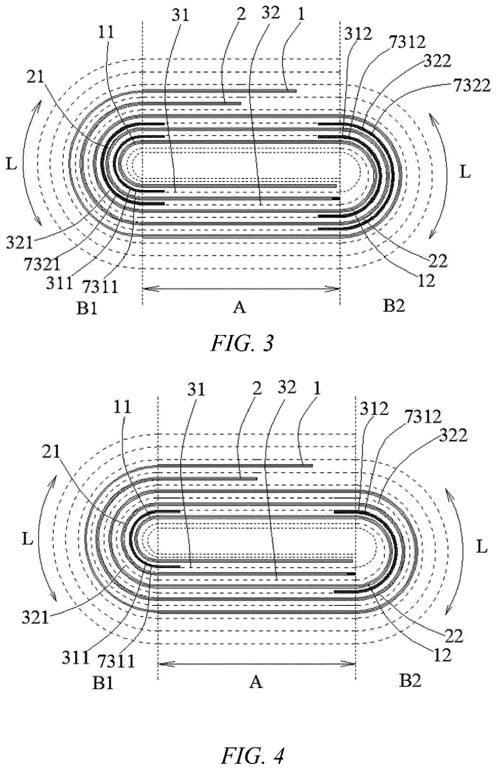

FIG. 3 is a schematic structural diagram of a cross-section of an electrode assembly in a flat body shape perpendicular to a winding axis according to an embodiment of the present application;
FIG. 4 is a schematic structural diagram of a cross-section of an electrode assembly in a flat body shape perpendicular to a winding axis according to another embodiment of the present application;

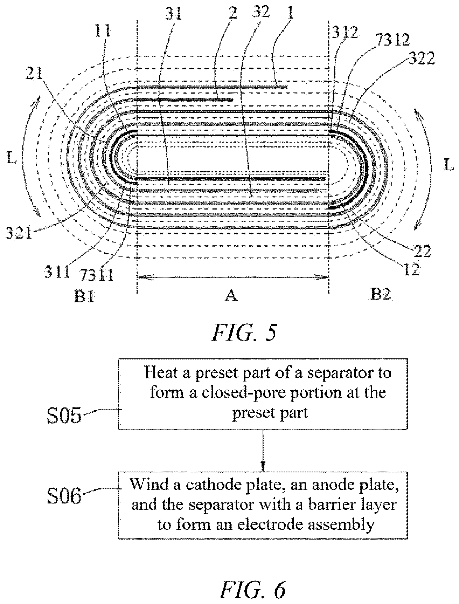

FIG. 5 is a schematic structural diagram of a cross-section of an electrode assembly in a flat body shape perpendicular to a winding axis according to another embodiment of the present application;
FIG. 6 is a schematic flowchart of a processing method for an electrode assembly according to an embodiment of the present application;

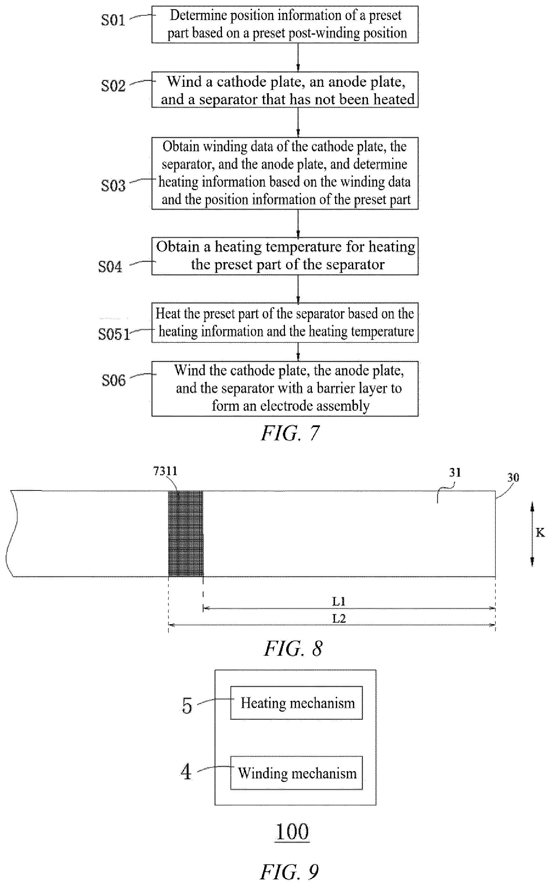

FIG. 7 is a schematic flowchart of a processing method for an electrode assembly according to another embodiment of the present application;
FIG. 8 is a schematic structural diagram of a separator in another flat body shape being unwound to a planar state according to another embodiment of the present application;
FIG. 9 is a schematic structural diagram of a processing apparatus for an electrode assembly according to an embodiment of the present application;

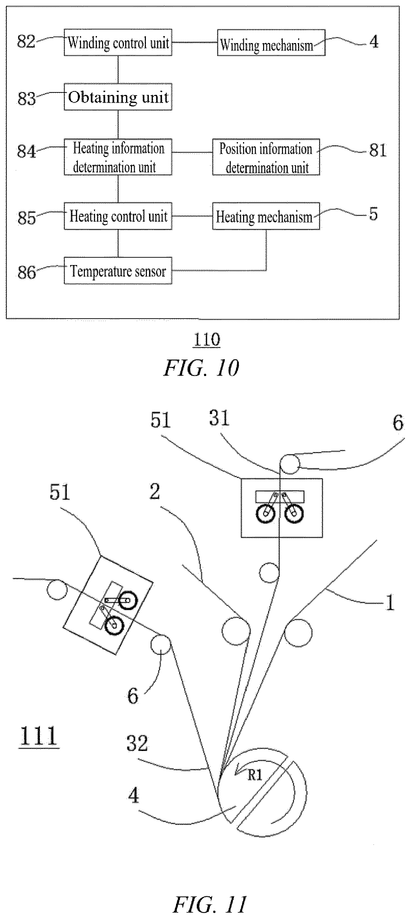

FIG. 10 is a schematic structural diagram of a processing apparatus for an electrode assembly according to another embodiment of the present application;
FIG. 11 is a schematic structural diagram of a processing apparatus for an electrode assembly according to another embodiment of the present application;

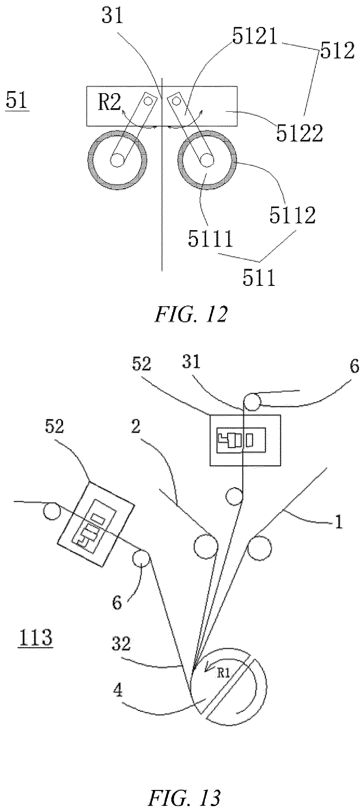

FIG. 12 is an enlarged schematic diagram of an embodiment of a heating structure in FIG. 11;
FIG. 13 is a schematic structural diagram of a processing apparatus for an electrode assembly according to another embodiment of the present application;

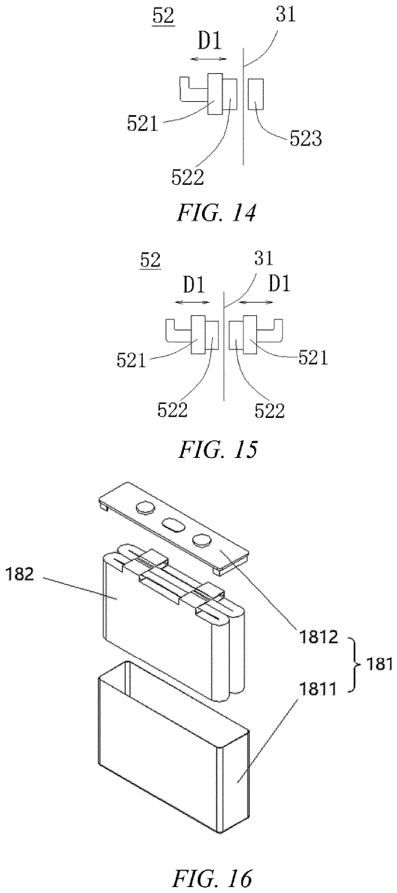

FIG. 14 is an enlarged schematic diagram of an embodiment of a heating structure in FIG. 13;
FIG. 15 is an enlarged schematic diagram of another embodiment of a heating structure in FIG. 13;
FIG. 16 is a schematic structural diagram of a battery cell according to another embodiment of the present application;

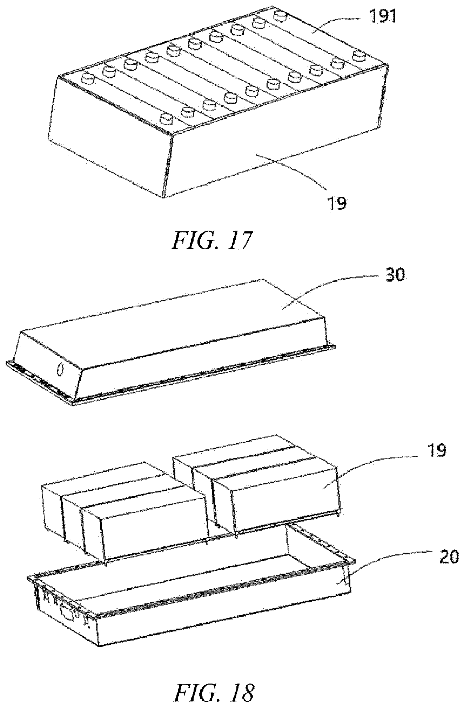

FIG. 17 is a schematic structural diagram of a battery module according to another embodiment of the present application;
FIG. 18 is a schematic structural diagram of a battery according to another embodiment of the present application; and

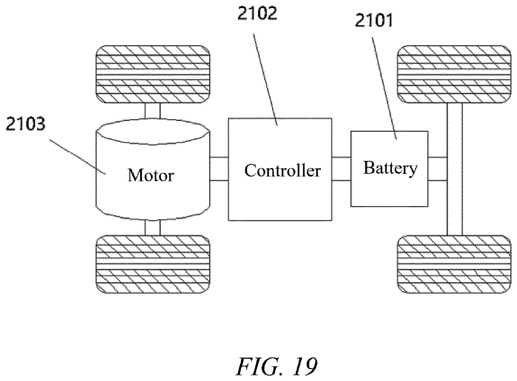

FIG. 19 is a schematic structural diagram of a power consuming apparatus according to another embodiment of the present application.

### Detailed Description of Embodiments

In order to make the objectives, technical solutions, and advantages of embodiments of the present application clearer, the technical solutions in the embodiments of the present application will be described clearly and completely below in conjunction with the accompanying drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used herein have the same meaning as those generally understood by those skilled in the art of the present application. The terms used in the description of the present application herein are merely for the purpose of describing specific embodiments, but are not intended to limit the present application. The terms "comprise/include" and "have" and any variations thereof in the specification and the claims of the present application as well as the foregoing description of the accompanying drawings are intended to cover a non-exclusive inclusion.

The "embodiment" mentioned herein means that a particular feature, structure, or characteristic described with reference to the embodiment can be included in at least one embodiment of the present application. This term appearing in various parts of the specification not necessarily refers to the same embodiment, nor an independent or alternative embodiment that is mutually exclusive to other embodiments. Those skilled in the art understand explicitly or implicitly that an embodiment described herein may be combined with another embodiment.

The term "and/or" herein is merely a description of the associated relationship of associated objects, and indicates that three relationships may exist. For example, A and/or B may indicate that the three instances of A alone, A and B simultaneously, and B alone. In addition, the character "/" herein generally indicates an "or" relationship between the associated objects.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application. In addition, the terms "first", "second" and the like in the description and the claims of the present application or in the above drawings are used to distinguish different objects, rather than to describe a specific order. Therefore, a feature defined by "first" or "second" may explicitly or implicitly include one or more features. In the description of the present application, the term "a plurality of" means two or more, unless otherwise specified.

In the description of the present application, it should be noted that, the term "mount", "engage", and "connect" should be interpreted in the broad sense unless explicitly defined and limited otherwise, which, for example, may mean a fixed connection, a detachable connection or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances.

In order to make a lithium-ion battery smaller in size and higher in energy density, a cathode plate, an anode plate, and a separator in an electrode assembly of a lithium-ion battery may be wound and then compacted. For example, FIG. 1 is a schematic perspective view of a structure of an electrode assembly. The electrode assembly includes an anode plate 1, a cathode plate 2, a first separator 31, and a second separator 32, where the anode plate 1, the first separator 31, the cathode plate 2, and the second separator 32 are stacked axially from inside to outside and then wound around a winding axis K to form a wound structure. The separator is an insulating film configured to separate the anode plate 1 from the cathode plate 2 to prevent the anode plate 1 and the cathode plate 2 from being shortcircuited. The wound structure of the electrode assembly is flat in shape, and a schematic structural diagram of a cross-section of the electrode assembly in a direction perpendicular to the winding axis K may be as shown in FIG. 2.

With reference to Figs. 1 and 2, the electrode assembly includes a flat region A, and a first bent region B1 and a second bent region B2 located at two ends of the flat region A. The flat region A is a region in the wound structure having a parallel structure. To be specific, the anode plate 1, the first separator 31, the cathode plate 2, and the second separator 32 in the flat region A are substantially parallel to each other, that is, surfaces of the anode plate 1, the first separator 31, the cathode plate 2, and the second separator 32 in each layer of the electrode assembly in the flat region A are all substantially flat surfaces. The first bent region B1 and the second bent region B2 are regions in the wound structure having bent structures. To be specific, the anode plate 1, the first separator 31, the cathode plate 2, and the second separator 32 in the first bent region B1 and the second bent region B2 are all bent, that is, surfaces of the anode plate 1, the first separator 31, the cathode plate 2, and the second separator 32 in each layer of the electrode assembly in the bent region 200 are all curved surfaces. The first bent region B1 and the second bent region B2 each have a bending direction L. The bending direction L can be understood as a direction pointing to the flat region along the surface of the electrode assembly in the bent region. For example, the bending direction L is a winding direction of the wound structure in the bent region 200.

The surface of the anode plate 1 is provided with an anode active material layer made of an anode active material, and the surface of the cathode plate 2 is provided with a cathode active material layer made of a cathode active material. For example, the cathode active material may be lithium manganate, lithium cobaltate, lithium iron phosphate, or lithium nickel-cobalt manganate, and the anode active material may be graphite or silicon.

When a lithium-ion battery is being charged, lithium ions are de-intercalated from the cathode and intercalated into the anode. However, some problems may occur. For example, due to an insufficient lithium intercalation space of the anode, and a too high resistance for lithium ions to be intercalated into the anode or a too fast speed at which lithium ions are de-intercalated from the cathode, the de-intercalated lithium ions cannot be intercalated into the anode active material layer of the anode plate in an equal amount. The lithium ions that cannot be intercalated into the anode plate can gain electrons only on the surface of the anode, thereby forming pure silver-white metallic lithium, which is lithium precipitation. Lithium precipitation not only reduces the performance of the lithium-ion battery and greatly shortens the cycle life, but also limits a fast charging capacity of the lithium-ion battery. In addition, when lithium precipitation occurs in the lithium-ion battery, the precipitated lithium metal is very active to react with an electrolyte at a low temperature, resulting in a decrease in a self-heating onset temperature (Tonset) of the battery and an increase in a self-heating rate, which seriously endangers the safety of the battery. Moreover, when the lithium precipitation is severe, the de-intercalated lithium ions may form lithium crystals on the surface of the anode plate, and the lithium crystals easily pierce the separator, resulting in a risk of short circuit between an adjacent cathode plate and anode plate.

In view of this, FIG. 3 is a schematic structural diagram of an electrode assembly according to an embodiment of the present application. The electrode assembly includes a cathode plate 2, an anode plate 1, a first separator 31, and a second separator 32. The first separator 31 and the second separator 32 are configured to separate the cathode plate 2 from the anode plate 1; and a closed-pore portion is provided in part of the region of the first separator 31 and/or the second separator 32, and the closed-pore portion is configured to block at least some ions de-intercalated from the cathode plate 2 located on one side of the closed-pore portion from being intercalated into the anode plate 1 located on the other side of the closed-pore portion.

The closed-pore portion is provided in the part of region of the first separator 31 and/or the second separator 32, and the closed-pore portion corresponds to a part of the anode plate 1 where lithium precipitation is prone to occur. During charging, the at least some ions de-intercalated from the cathode plate 2 are blocked by the closed-pore portion, so that the ions blocked by the closed-pore portion cannot be intercalated into the anode plate 1 adjacent to the cathode plate 2, thereby reducing the occurrence of lithium precipitation in the part of the anode plate 1 where lithium precipitation is prone to occur, improving the safety performance of the battery cell, and prolonging the service life of the battery cell. Forming the closed-pore portion in the part of region of the separator facilitates production and processing, thereby improving the production efficiency. The cathode plate 2 and the anode plate 1 being adjacent to each other means that one layer of cathode plate 2 and one layer of anode plate 1 in the electrode assembly are adjacent to each other and there is no other layer of cathode plate 2 or other layer of anode plate 1 between them. A separator adjacent to the cathode plate 2 means that one layer of cathode plate 2 and one layer of separator in the electrode assembly are adjacent to each other, without another layer of separator or anode plate 1 therebetween. A separator adjacent to the anode plate 1 means that one layer of anode plate 1 and one layer of separator in the electrode assembly are adjacent to each other, without another layer of separator or cathode plate 2 therebetween. The closed-pore portion is formed by heating the part of region of the separator. The separator is heated such that pore closing occurs on the separator, and inner space of the separator is blocked, which blocks a movement channel of cathode lithium ions, thereby reducing the occurrence of lithium precipitation in the anode plate. Heating the separator to form the closed-pore portion facilitates production and processing, thereby improving the production efficiency.

As shown in FIG. 3, in an embodiment of the present application, the electrode assembly includes a flat region A, and a first bent region B1 and a second bent region B2 that connect two ends of the flat region. For brevity of description, the electrode assembly in this embodiment is described by taking the electrode assembly having a wound structure flat in shape as an example. For example, structures of the first bent region B1, the second bent region B2, and the flat region A in the wound structure in flat in shape may be shown in FIG. 6 that is a schematic diagram of a preset structure of an electrode assembly in its bent region according to an embodiment of the application. The electrode assembly, in its bent region A, includes a cathode plate 2, an anode plate 1, and a first separator 31 and a second separator 32 configured to separate the cathode plate 2 from the anode plate 1. The first separator 31 and the second separator 32 may be independently provided between the cathode plate 2 and the anode plate 1 adjacent to each other. In another embodiment of the present application, one anode plate 1, one separator 31, one cathode plate 2, and another separator 32 may be stacked and then wound or folded, or at least one (e.g., two or more) cathode plate 2, at least one (e.g., two or more) anode plate 1, and at least two first separators 31 and second separators 32 (e.g., four or more, with the number of the first separators 31 and the second separators 32 being twice the number of the cathode plates 2 or the anode plates 1) may be stacked and then wound or folded, to form the first bent region B1 and the second bent region B2. When the electrode assembly, in the first bent region B1 and the second bent region B2, has a plurality of layers of cathode plates 2, a plurality of layers of anode plates 1, and a plurality of layers of first separators 31 and second separators 32, the first bent region B1 and the second bent region B2 each include a structure in which the cathode plate 2, the separator 3, and the anode plate 1 are alternately distributed. The closed-pore portion is provided on at least one of the first separator 31 and the second separator 32. Such provision enables a closed-pore portion to be included between at least one layer of cathode plate 2 and at least one layer of anode plate 1.

When the electrode assembly has the wound structure, a width direction of the cathode plate 2 and the anode plate 1 is parallel to the direction of the winding axis, and the width direction of the cathode plate 2 and the anode plate 1 is parallel to a direction perpendicular to the bending direction L. For ease of the subsequent description, in this embodiment, the width direction of the cathode plate 2 and the anode plate 1, the direction perpendicular to the bending direction L, and the direction of the winding axis are collectively referred to as a direction K.

During the research and development, the inventors found that lithium precipitation often occurs in a bent region of an electrode assembly. Through further research, the inventors found that the cause of the lithium precipitation is the exfoliation of an active material. The main cause thereof is as follows: An anode active material is coated on a surface of an anode plate, and a cathode active material is coated on a surface of the cathode plate. The cathode plate and the anode plate need to be bent in a bent region, and this may cause the exfoliation of their respective active materials, which is referred to as powder dropping. In particular, the innermost layer of anode plate in the bent region is bent most and is more prone to the exfoliation of an active material. Due to the exfoliation of the active material, especially the exfoliation of the active material from the anode plate, the number of lithium intercalation sites of the anode active material layer of the anode plate may be less than the number of lithium ions that can be provided by the cathode active material layer of the adjacent cathode plate. Therefore, lithium precipitation easily occurs when the lithium battery is being charged.

In view of this, in the embodiment shown in FIG. 3, the cathode plate 2, the first separator 31, the second separator 32, and the anode plate 1 are wound to form the first bent region B1 and the second bent region B2. At least part of the closed-pore portion is provided on the first separator 31 and/or the second separator 32 in the bent regions B1 and B2.

In some embodiments, the cathode plate 2, the first separator 31, the second separator 32, and the anode plate 1 are wound to form a first bent region B1 and a second bent region B2. At least part of a preset post-winding position is provided in the bent regions B1 and B2 along a surface of at least one of the cathode plate 2, the anode plate 1, or the first separator 31 and the second separator 32. That is, at least part of the closed-pore portion is provided on a portion where at least one of the first separator 31 and the second separator 32 is located in the bent regions B1 and B2.

In this embodiment, in the bent regions B1 and B2, there is a large gap between the cathode plate 2 and the anode plate 1. At least part of the closed-pore portion is provided in the bent regions B1 and B2 on the surface of at least one of the first separator 31 and the second separator 32, that is, the closed-pore portion is provided in the bent regions B1 and B2 after the winding. The exfoliation of the active material more easily occurs on the cathode plate 2 and the anode plate 1 in the bent region due to their large bending degrees. Due to the exfoliation of the active material, especially the exfoliation of the active material from the anode plate 1, the number of lithium intercalation sites of the anode active material layer of the anode plate 1 may be less than the number of lithium ions that can be provided by the cathode active material layer of the adjacent cathode plate 2. Therefore, lithium precipitation easily occurs when the lithium battery is being charged. Therefore, providing at least part of the closed-pore portion in the bent regions B1 and B2 of at least one of the first separator 31 and the second separator 32 can effectively suppress the occurrence of lithium precipitation.

In another embodiment of the present application, two ends of the closed-pore portion extending in a bending direction L are both located in the bent regions B1 and B2, that is, all parts of the closed-pore portion are located in the bent region B1 and B2. In this embodiment, the electrode assembly further includes the flat region A connected to the bent regions B1 and B2, the bending direction L refers to a direction along the curved surface of the bent regions B1 and B2 and pointing to the flat region A, and the direction perpendicular to the bending direction L refers to a direction perpendicular to the bending direction L.

In another embodiment of the present application, the end of the closed-pore portion extending in the bending direction L is located in the flat region A, and the other end is located in the bent regions B1 and B2.

In another embodiment of the present application, to improve performance of the bent region in blocking lithium ions, an area of the closed-pore portion in the bent regions B1 and B2 should be as large as possible. For example, both ends of the closed-pore portion extending in the bending direction L are both located in the flat region A, that is, the closed-pore portion is not only located in the bent regions B1 and B2, but also extends further to the flat region A.

In another embodiment of the present application, both ends of the closed-pore portion extending in the bending direction L are located at boundaries between the flat region A, and the bent regions B1 and B2, or both ends of the closed-pore portion extending in the bending direction L are close to the boundaries between the flat region A, and the bent regions B1 and B2.

In other embodiments of the present application, at least part of the closed-pore portion is provided at the bent part of the first separator 31 and/or the second separator 32 adjacent to the first-bent part 21 of the cathode plate 2 and/or at the bent part of the first separator 31 and/or the second separator 32 adjacent to the second-bent part 22, and/or at least part of the closed-pore portion is provided at the bent part of the first separator 31 and/or the second separator 32 adjacent to the first-bent part 11 of the anode plate 1 and/or at the bent part of the first separator 31 and/or the second separator 32 adjacent to the second-bent part 12.

During charging, the cathode plate with a cathode first-bent part and a cathode second-bent part adjacent to each other are prone to lithium precipitation. The at least part of the closed-pore portion is provided at the bent part of the separator that is adjacent to the first-bent part of the cathode plate, and/or the at least part of the closed-pore portion is provided at the bent part of the separator that is adjacent to the second-bent part of the cathode plate. At least some ions de-intercalated from a cathode active material layer at the cathode first-bent part and the cathode second-bent part are blocked by the closed-pore portion, so that the ions blocked by the closed-pore portion cannot be intercalated into an anode active material layer of the anode plate, in the bent region, that is adjacent to the cathode plate. This can reduce the occurrence of lithium precipitation in the cathode plate with the cathode first-bent part and the cathode second-bent part adjacent to each other, improve the safety performance of the battery cell, and prolong the service life of the battery cell.

As shown in FIG. 3, in an embodiment of the present application, at least part of the closed-pore portion is provided at a first-bent part 311 of the first separator 31, a second-bent part 312 of the first separator 31, a first-bent part 321 of the second separator 32, and a second-bent part 322 of the second separator 32. That is, at least part of a first closed-pore portion 7311 formed after winding is provided at the first-bent part 311 of the first separator 31, and a second closed-pore portion 7312 is provided at the second-bent part 312 of the first separator 31. That is, the first closed-pore portion 7311 and the second closed-pore portion 7312 are provided on the first separator 31 adjacent to the first-bent part 21 and the second-bent part 22 of the cathode plate 2 and located on an inner side. A third closed-pore portion 7321 formed after winding is provided at the first-bent part 321 of the second separator 32, and a fourth closed-pore portion 7322 is provided at the second-bent part 322 of the second separator 32. That is, the third closed-pore portion 7321 and the fourth closed-pore portion 7322 are provided on the second separator 32 adjacent to the first-bent part 21 and the second-bent part 22 of the cathode plate 2 and located on an outer side. However, the predetermined bends of the separator are not limited to the first and second bends, and a range of any number of bends may be selected as required. For example, the closed-pore portion may be provided at bent parts corresponding to the first and fourth or first and sixth or first and eighth bends, or the third and fourth or third and sixth or third and eighth bends, or another bend range of the first separator 31 and/or the second separator 32 in the bent region.

As shown in FIG. 4, in another embodiment of the present application, at least part of the closed-pore portion is provided at a first-bent part 311 of the first separator 31 and a second-bent part 312 of the first separator 31. That is, at least part of the first closed-pore portion 7311 and the second closed-pore portion 7312 formed after winding are provided on the first separator 31 adjacent to the first-bent part 21 and the second-bent part 22 of the cathode plate 2 and located on an inner side.

As shown in FIG. 5, in another embodiment of the present application, at least part of the closed-pore portion is provided at a first-bent part 311 of the first separator 31 and a second-bent part 312 of the first separator 31. That is, the first closed-pore portion 7311 and the second closed-pore portion 7312 are provided on the first separator 31 adjacent to the first-bent part 21 and the second-bent part 22 of the cathode plate 2 and located on the inner side. A difference between the embodiment of FIG. 5 and the embodiment of FIG. 4 lies in that the two ends of the closed-pore portion extending in the bending direction L in the embodiment of FIG. 4 are located in the bent regions B1 and B2; and the two ends of the closed-pore portion extending in the bending direction L in the embodiment of FIG. 5 are located at the boundaries between the flat region A, and the bent regions B1 and B2. FIG. 6 is a schematic flowchart of a processing method for an electrode assembly according to an embodiment of the present application. The electrode assembly includes a cathode plate, an anode plate, and a separator. The separator is configured to separate the cathode plate from the anode plate. The electrode assembly is formed by winding the cathode plate, the separator, and the anode plate. The processing method according to this embodiment includes:
S05: heating a preset part of the separator to form a closed-pore portion at the preset part; and
S06: winding the cathode plate, the separator, and the anode plate to form the electrode assembly, where the closed-pore portion is located between the cathode plate and the anode plate adjacent to each other after the winding, and the closed-pore portion is configured to block at least some ions de-intercalated from the cathode plate located on one side of the closed-pore portion from being intercalated into the anode plate located on the other side of the closed-pore portion.

In this embodiment, the closed-pore portion is provided in the part of region of the separator, and the closed-pore portion after the winding corresponds to a part of the anode plate where lithium precipitation is prone to occur. During charging, the at least some ions de-intercalated from the cathode plate are blocked by the closed-pore portion, so that the ions blocked by the closed-pore portion cannot be intercalated into the anode plate adjacent to the cathode plate, thereby reducing the occurrence of lithium precipitation in the part of the anode plate where lithium precipitation is prone to occur, improving the safety performance of the battery cell, and prolonging the service life of the battery cell. Forming the closed-pore portion in the part of region of the separator facilitates production and processing, thereby improving the production efficiency.

As shown in FIG. 7, in the processing method according to another embodiment of the present application, in step S05 of FIG. 6, before the step of heating a preset part of the separator, the method further includes:
S01, determining position information of the preset part based on a preset post-winding position, where the preset post-winding position is a position of the closed-pore portion in the electrode assembly after the winding, and is located between the cathode plate and the anode plate adjacent to each other, and the position information of the preset part includes information for characterizing a start position and an end position of the closed-pore portion;
S02, winding the cathode plate, the anode plate, and the separator that has not been heated;
S03, obtaining winding data of the cathode plate, the separator, and the anode plate, and determining heating information based on the winding data and the position information of the preset part; and
S04, obtaining a heating temperature for heating the preset part of the separator; and then step S05 of heating a preset part of the separator includes:
   S051, heating the preset part of the separator based on the heating information and the heating temperature.

In some embodiments, step S02 may be performed before step S01, or after step S01, or performed simultaneously with step S01.

In some embodiments, step S04 may be performed before step S03, or after step S03, or performed simultaneously with step S03.

In some embodiments, in step S01, first, the position information of the preset part is determined based on the preset post-winding position, and the preset post-winding position refers to a position of a desired closed-pore portion in the electrode assembly after the winding, and corresponds to a part of an anode active material layer where lithium precipitation is prone to occur. For example, the preset post-winding position may be the bent regions B1 and B2 of the electrode assembly after the winding, or the preset post-winding position may be the bent regions B1 and B2 of the electrode assembly after the winding along with part of the flat region A. The preset post-winding position is located between the cathode plate 2 and the anode plate 1 adjacent to each other.

In some embodiments, the position information of the preset part includes information for characterizing a start position and an end position of the closed-pore portion.

In some embodiments, the heating temperature for heating the preset part of the separator ranges from 90 degrees Celsius to 115 degrees Celsius. In this embodiment, the heating temperature is ranges from 90 degrees Celsius to 115 degrees Celsius, which can achieve a better pore closing effect and effectively block ions.

**Table 1**

| Serial No. | Separator material | Heating temperature for pore closing (degree Celsius) |
|---|---|---|
| 1 | Polyethylene | 90-100 |
| 2 | Polypropylene | 100-110 |
| 3 | Polyethylene and ceramic-coated diaphragm | 100-115 |

The separator has a large number of penetrating micropores to ensure that electrolyte ions freely pass through, and has good permeability to lithium ions, so that the separator substantially cannot block the lithium ions. For example, the separator 3 may include a separator base layer, or may include a separator base layer and a functional layer located on a surface of the separator base layer. The separator base layer may be at least one of polypropylene, polyethylene, an ethylene-propylene copolymer, polybutylene terephthalate, etc., and the functional layer may be a ceramic-coated diaphragm. In some embodiments, as shown in Table 1, when the separator 3 uses polyethylene, a pore closing temperature of the separator ranges from 90 degrees Celsius to 100 degrees Celsius; when the separator 3 uses polypropylene, the pore closing temperature of the separator ranges from 100 degrees Celsius to 110 degrees Celsius; and when the separator base layer of the separator 3 uses polyethylene, and the functional layer uses a ceramic-coated diaphragm, the pore closing temperature of the separator ranges from 100 degrees Celsius to 115 degrees Celsius. The material of the separator 3 is not limited to the above materials, and the pore closing temperature thereof can be adjusted with the change of the material.

In some embodiments, as shown in Table 1, materials of common separators and corresponding closed-pore heating temperatures are shown. Taking PE as an example, in some embodiments, a heating temperature for pore closing of PE ranges from 90 to 100. If the temperature is lower than 90 degrees Celsius, a pore closing effect is poor, a blocking effect on lithium ions is poor, and lithium precipitation cannot be effectively suppressed. If the temperature is higher than 100 degrees Celsius, shrinkage and deformation of the separator may be obvious, which may affect the winding performance of the separator. For this reason, a heating temperature needs to be controlled to be within an appropriate temperature range.

In this embodiment, as shown in FIG. 8, taking the separator 31 and the closed-pore portion 7311 thereon as an example, as shown in the schematic diagram of the separator 31 unwound to a planar state, the position information of the preset part may include a heating start point length L1 and a heating end point length L2 of the closed-pore portion 7. For a structure of the separator 32 and the closed-pore portion 7321 thereon, reference may be made to the separator 31 and the closed-pore portion 7311. The heating start point length L1 of the closed-pore portion 7 is defined as a distance from a start point of the closed-pore portion 7 in a length direction of the separator to the farthest initial winding end 30 of the cathode plate 2, the anode plate 1, and the first separator 31 or the second separator 32, assuming that the first separator 31 or the second separator 32 is unbound as a whole to a planar state. In some embodiments, an initial winding end of the first separator 31 is the farthest, the heating start point length L1 of the closed-pore portion 7 is a distance from the start point of the closed-pore portion 7 in the length direction of the separator to the initial winding end 30 of the first separator 31. In other embodiments, an initial winding end of the second separator 32 is the farthest, the heating start point length L1 of the closed-pore portion 7 is a distance from the start point of the closed-pore portion 7 in the length direction of the separator to the initial winding end 30 of the second separator 32. The heating end point length L2 of the closed-pore portion 7 is defined as a distance from an end point of the closed-pore portion 7 in a length direction of the separator to the farthest initial winding end of the first separator 31 and the second separator 32, assuming that the first separator 31 and the second separator 32 that are wound are unbound on the same plane. In some embodiments, an initial winding end of the first separator 31 is the farthest, the heating end point length L2 of the closed-pore portion 7 is a distance from the end point of the closed-pore portion 7 in the length direction of the separator to the initial winding end 30 of the first separator 31. In other embodiments, an initial winding end of the second separator 32 is the farthest, the heating end point length L2 of the closed-pore portion 7 is a distance from the end point of the closed-pore portion 7 in the length direction of the separator to the initial winding end 30 of the second separator 32. The closed-pore portion 7 may be provided on one surface or two opposite surfaces of the first separator 31 and the second separator 32, and one or more segments of the closed-pore portion 7 may be provided on each surface. Then the position information of the preset part may include position information of each segment of the closed-pore portion 7 on each surface of the first separator 31 and the second separator 32.

Step S02 in this embodiment includes winding the cathode plate 2, the anode plate 1, and the first separator 31 and the second separator 32 that have not been heated. In some embodiments, to put start ends of the cathode plate 2, the anode plate 1, and the first separator 31 and the second separator 32 that have not been heated into a winding apparatus, corresponding winding data is obtained. In some embodiments, with reference to FIG. 2, it can be seen that positions of a winding start end 20 of the cathode plate 2 and a winding start end 10 of the anode plate 1 are different from those of winding start ends 10 of the first separator 31 and the second separator 32. Lengths of the winding start ends 30 of the first separator 31 and the second separator 32 are greater than those of the winding start end 20 of the cathode plate 2 and the winding start end 10 of the anode plate 1, that is, the first separator 31 and the second separator 32 have already been partially wound before the cathode plate 2 and the anode plate 1 are wound. In some embodiments, positions of a winding start end 20 of the cathode plate 2 and a winding start end 10 of the anode plate 1 may be the same or different. In some embodiments, positions of winding start ends of the first separator 31 and the second separator 32 may be the same or different. The positions of the winding start ends of the cathode plate 2, the anode plate 1, the first separator 31, and the second separator 32 are not limited to those in the embodiment shown in FIG. 2.

In step S03 of this embodiment, the winding data of the separator is obtained, and the heating information is determined based on the winding data and the position information of the preset part.

In some embodiments, the winding data includes a winding linear velocity V of the separator. The winding linear velocity V refers to a moving velocity of the separator when entering the entrance to a winding roller. The winding linear velocity V may be a preset velocity value. In some embodiments, the winding linear velocity V may be a fixed value. Correspondingly, in this embodiment, the heating information includes a heating start time T1 and a heating end time T2. In some embodiments, when the closed-pore portion 7 has a plurality of segments, the heating information includes heating information of each segment of the closed-pore portion 7. When the closed-pore portion 7 is provided on two different surfaces of the separator, the heating information includes heating information on each surface.

In this embodiment, the determining heating information based on the winding data and the position information of the preset part is: determining the heating start time T1 and the heating end time T2 based on the winding linear velocity V of the heating element and the heating start point length L1 and the heating end point length L2 of the closed-pore portion 7.

A specific determination method is as follows: The heating start time T1 can be a time from the start of a winding action to the start of heating the separator. In some embodiments, T1=L1/V, that is, the heating start time T1 is equal to a ratio of the start point length L1 of the closed-pore portion 7 on a surface of the separator in the heating information to the winding linear velocity V. The heating end time T2 depends on a length of the closed-pore portion 7 (a difference between the start point length L1 and the end point length L2), the winding linear velocity V of the separator, and a heating length H of the heating mechanism. In some embodiments, T2=T1+(L2-L1-H)/V, that is, a difference between the heating end time T2 and the heating start time T1 is the length of the closed-pore portion 7 minus the heating length H of the heating mechanism and then divided by the winding linear velocity V. A specific structure of the heating mechanism is further described in subsequent embodiments.

In step S04 in this embodiment, the heating temperature for heating the preset part of the separator is obtained. The heating temperature of the preset part of the separator needs to be monitored and controlled, so that the heating temperature is controlled to be within a reasonable range and a pore closing effect is ensured.

In step S05 in the above embodiment, step S05 of heating a preset part of the separator includes: S051, heating the preset part of the separator based on the heating information and the heating temperature.

In the above embodiment, when the heating information includes the heating start time T1 and the heating end time T2, step S041 is to heat the separator based on the heating start time T1 and the heating end time T2 to form the closed-pore portion 7 in the preset post-winding position. In some embodiments, when the time reaches the heating start time T1, the heating mechanism performs heating in the position of the preset part of the surface of the separator; and when the time reaches the heating end time T2, the heating mechanism blocks heating in the position of the preset part of the surface of the separator, and forms a closed-pore portion 7 at the preset part of the heated surface. When the closed-pore portion 7 has a plurality of segments on the surface of the separator, the heating information includes a plurality of groups of heating start times T1 and heating end times T2, and the multi-segment closed-pore portion 7 is formed after the heating mechanism performs heating a plurality of times.

In other embodiments, in step S01, the position information of the preset part may include a start angle θ1 and an end angle θ2 of the closed-pore portion. The heating start angle θ1 is equal to an angle through which a winding mechanism turns when a start point of the closed-pore portion 7 reaches the heating mechanism. The heating end angle θ2 is equal to an angle through which the winding mechanism turns when an end point of the closed-pore portion 7 reaches the heating mechanism. In some embodiments, when the closed-pore portion 7 has a plurality of segments, the position information of the preset part includes position information of a preset part of each segment of the closed-pore portion 7. When the closed-pore portion 7 is provided on two different surfaces of the separator, information about the preset part includes position information of a preset part of each surface.

In this embodiment, in step S03, the winding data includes an overall winding angle θ of the cathode plate, the separator, and the anode plate, which defines that the overall winding angle θ is 0 when the farthest initial winding ends 30 of the first separator 31 and the second separator 32 are wound to the winding mechanism. A specific structure of the winding mechanism is described in subsequent embodiments. The overall winding angle θ increases continuously as the cathode plate 2, the anode plate 1, the first separator 31, and the second separator 32 are continuously wound.

In this embodiment, the heating information includes a heating start signal and a heating end signal.

In this embodiment, step S03 of determining heating information based on the winding data and the position information of the preset part is: determining the heating start signal and the heating end signal based on the overall winding angle θ and the start angle θ1 and the end angle θ2.

A specific method is as follows: When the overall winding angle θ reaches the heating start angle θ1, the heating information is the heating start signal; and when the overall winding angle θ reaches the heating end angle θ2, the heating information is the heating end signal. In some embodiments, when the closed-pore portion has a plurality of segments, the heating information includes heating information of each segment of the closed-pore portion. When the closed-pore portion is provided on two different surfaces of the separator, the heating information includes heating information on each surface.

In this embodiment, when the heating information includes the heating start signal and the heating end signal, step S051 is to heat the separator based on the heating temperature, the heating start signal, and the heating end signal to form the closed-pore portion 7 in the preset post-winding position. When the heating information is the heating start signal, the heating mechanism performs heating in the position of the preset part of the surface of the separator; and when the heating information is the heating end signal, the heating mechanism blocks heating in the position of the preset part of the surface of the separator, and forms a closed-pore portion at the preset part of the heated surface. When the closed-pore portion has a plurality of segments on the surface of the separator, the heating information includes a plurality of groups of heating start signals and heating end signals, and the multi-segment closed-pore portion is formed on the separator after the heating mechanism performs heating a plurality of times. Closed-loop control is performed on the heating of the separator based on the heating temperature, and the heating temperature of the separator is controlled to be within a preset temperature range (referring to Table 1) to ensure a pore closing effect.

In the above embodiment, the cathode plate 2, the anode plate 1, and the first separator 31 and the second separator 32 that have not been heated are wound, and then the winding data is obtained, and then a heating position for the closed-pore portion is determined based on the position of the preset part, so that the heating for the closed-pore portion can be automatically implemented, and the closed-pore portion after the heating can be formed in the preset post-winding position, to block ions in the preset post-winding position in a targeted manner, thereby reducing the occurrence of lithium precipitation. The formation of the closed-pore portion can be performed simultaneously with a winding action, so that the heating for the closed-pore portion can be accurately implemented.

In some embodiments, the preset post-winding position is on one surface or two surfaces of the first separator 31 and/or the second separator 32.

The preset post-winding position being either on one surface or two surfaces of the first separator 31 and/or the second separator 32 can enable some ions to be blocked and reduce the occurrence of lithium precipitation. The preset post-winding position may be a position of the electrode assembly after winding where lithium precipitation is prone to occur. Forming a closed-pore portion in the preset post-winding position can prevent the ions blocked by the closed-pore portion from being intercalated into an anode active material layer adjacent to a cathode active material layer, thereby reducing the occurrence of lithium precipitation in the part of the anode plate where lithium precipitation is prone to occur, improving the safety performance of the battery cell, and prolonging the service life of the battery cell.

In some embodiments, the cathode plate 2, the first separator 31, the second separator 32, and the anode plate 1 are wound to form the first bent region B1 and the second bent region B2. At least part of the preset post-winding position is provided on a surface of at least one of the first separator 31 and the second separator 32 in the first bent region B1 and the second bent region B2. The exfoliation of the active material more easily occurs on the cathode plate 2 and the anode plate 1 in the bent region due to their large bending degrees. Due to the exfoliation of the active material, especially the exfoliation of the active material from the anode plate 1, the number of lithium intercalation sites of the anode active material layer of the anode plate 1 may be less than the number of lithium ions that can be provided by the cathode active material layer of the adjacent cathode plate 2. Therefore, lithium precipitation easily occurs when the lithium battery is being charged. Therefore, providing the closed-pore portion on the surface of at least one of the first separator 31 and the second separator 32 in the bent regions B1 and B2 can effectively suppress the occurrence of lithium precipitation.

As shown in FIG. 9, an embodiment of a third aspect of the present application provides a processing apparatus 100 for an electrode assembly. The electrode assembly includes a cathode plate 2, an anode plate 1, a first separator 31, and a second separator 32. The first separator 31 and the second separator 32 are configured to separate the cathode plate 2 from the anode plate 1. The electrode assembly is formed by winding the cathode plate 2, the first separator 31, the second separator 32, and the anode plate 1. The cathode plate 2 includes a cathode active material layer, and the anode plate 1 includes an anode active material layer. For a structure of the electrode assembly, reference may be made to the structure of the electrode assembly shown in the embodiments of Figs. 2 to 5. The processing apparatus 100 in this embodiment includes a heating mechanism 5 and a winding mechanism 4. The heating mechanism 5 is configured to heat the preset part of a surface of the separator to form the closed-pore portion. The separator includes at least one of the first separator 31 and the second separator 32. The winding mechanism 4 is configured to wind the cathode plate 2, the anode plate 1, the first separator 31, and the second separator 32 to form the electrode assembly, The heating mechanism is located upstream of the winding mechanism. The closed-pore portion is located between the cathode plate 2 and the anode plate 1 adjacent to each other after the winding, and the closed-pore portion is configured to block at least some ions de-intercalated from the cathode plate 2 located on one side of the closed-pore portion from being intercalated into the anode plate 1 located on the other side of the closed-pore portion.

The processing apparatus for an electrode assembly in this embodiment can heat the preset part of the surface of the separator to form the closed-pore portion, so that the heating for the closed-pore portion can be accurately implemented. The preset part corresponds to a part of a cathode active material layer where lithium precipitation is prone to occur. During charging, the at least some ions de-intercalated from the part of the cathode active material layer where lithium precipitation is prone to occur are blocked by the closed-pore portion, so that the ions blocked by the closed-pore portion cannot be intercalated into the anode active material layer adjacent to the cathode active material layer, thereby reducing the occurrence of lithium precipitation in the part of the anode plate where lithium precipitation is prone to occur, improving the safety performance of the battery cell, and prolonging the service life of the battery cell. Heating the separator to form the closed-pore portion facilitates production and processing, thereby improving the production efficiency. As shown in FIG. 10, a processing apparatus 110 in another embodiment of the present application further includes a position information determination unit 81, a winding control unit 82, an obtaining unit 83, a heating information determination unit 84, a heating control unit 85, and a temperature sensor 86. The position information determination unit 81 is configured to determine position information of the preset part based on a preset post-winding position, and send the position information to the heating information determination unit 84, where the preset post-winding position is a position of the closed-pore portion in the electrode assembly after the winding, and is located between the cathode plate 2 and the anode plate 1 adjacent to each other, and the position information of the preset part includes information for characterizing a start position and an end position of the closed-pore portion. The winding control unit 82 is configured to control the winding mechanism 4 to wind the cathode plate 2, the anode plate 1, and the first separator 31 and the second separator 32 that have not been heated. The obtaining unit 83 is configured to obtain winding data of the cathode plate 2, the first separator 31, the second separator 32, and the anode plate 1, and send the winding data to the heating information determination unit 84. The heating information determination unit 84 is configured to determine heating information based on the winding data and the position information of the preset part. The temperature sensor 86 is configured to measure a temperature of the heating mechanism 5, and send the measured temperature to the heating control unit 85. The heating control unit 85 is configured to control, based on the heating information and the monitored temperature, the heating mechanism 5 to heat the preset part of the first separator 31 and the second separator 32 to form the closed-pore portion. The heating control unit 85 controls a heating temperature of the heating mechanism 5 based on a temperature measured by the temperature sensor 86, and controls the heating temperature to be within a predetermined temperature range to ensure a pore closing effect of the closed-pore portion.

In this embodiment, the obtaining unit 83 may be a position sensor, a Hall sensor, or the like. The position information determination unit 81, the winding control unit 82, the heating information determination unit 84, and the heating control unit 85 may be components with control arithmetic functions, such as a controller in a power consuming apparatus. In addition, it should be noted that the position information determination unit 81, the winding control unit 82, the heating information determination unit 84, and the heating control unit 85 in this embodiment may be integrated into one chip; or the winding control unit 82 is used as an independent chip, and the position information determination unit 81, the heating information determination unit 84, and the heating control unit 85 are integrated into one chip; or the winding control unit 82 is used as an independent chip, and the position information determination unit 81, the heating information determination unit 84, and the heating control unit 85 are respectively provided on a circuit board as three circuit modules.

In some embodiments, the winding data includes a winding linear velocity V of the separator, the position information of the preset part includes a start point length L1 and an end point length L2 of the closed-pore portion, and the heating information includes a heating start time T1 and a heating end time T2. For the specific definitions of the start point length L1 and the end point length L2 of the closed-pore portion, reference may be made to the embodiment of FIG. 8.

Correspondingly, in this embodiment, working modes of the position information determination unit 81, the winding control unit 82, the obtaining unit 83, the heating information determination unit 84, the heating control unit 85, and the temperature sensor 86 are as follows:

The position information determination unit 81 determines the start point length L1 and the end point length L2 of the closed-pore portion based on the preset post-winding position, and sends the start point length and the end point length to the heating information determination unit. For a specific method for determining the heating start point length L1 and the heating end point length L2 of the closed-pore portion based on the preset post-winding position, reference may be made to the determination method in the method claims. The start point length L1 and the end point length L2 of the closed-pore portion may be calculated by the position information determination unit 81 based on the preset post-winding position, or the user may input the preset start point length L1 and end point length L2 of the closed-pore portion to the position information determination unit 81.

The winding control unit 82 is configured to control the winding mechanism 4 to wind the cathode plate 2, the anode plate 1, and the first separator 31 and the second separator 32 that have not been heated.

The obtaining unit 83 obtains the winding linear velocity V of the separator, and sends the winding linear velocity to the heating information determination unit 84.

In some embodiments, the heating information determination unit 84 being configured to determine heating information based on the winding data and the position information of the preset part includes: the heating information determination unit 84 determines the heating start time T1 and the heating end time T2 based on the winding linear velocity V of the separator and the heating start point length L1 and the heating end point length L2 of the closed-pore portion.

The temperature sensor 86 is configured to measure a temperature of the heating mechanism 5, and send the measured temperature to the heating control unit 85.

The heating control unit 85 heats the separator based on the heating start time T1 and the heating end time T2 and the temperature measured by the temperature sensor 86 to form the closed-pore portion in the preset post-winding position. In this embodiment, for a specific method, reference may be made to the specific method corresponding to the method claims.

In other embodiments, the winding data includes an overall winding angle θ of the cathode plate 2, the first separator 31, the second separator 32, and the anode plate 1, the position information of the preset part includes a heating start angle θ1 and a heating end angle θ2 for the closed-pore portion, and the heating information includes a heating start signal and a heating end signal.

Correspondingly, in this embodiment, specific working modes of the position information determination unit 81, the winding control unit 82, the obtaining unit 83, the heating information determination unit 84, the heating control unit 85, and the temperature sensor 86 are as follows:
The position information determination unit 81 determines the heating start angle θ1 and the heating end angle θ2 of the closed-pore portion based on the preset post-winding position, and sends the heating start angle and the heating end angle to the heating information determination unit. For a method for determining the heating start angle θ1 and the heating end angle θ2 of the closed-pore portion based on the preset post-winding position, reference may be made to the determination method in the method claims. The heating start angle θ1 and the heating end angle θ2 of the closed-pore portion may be calculated by the position information determination unit 81 based on the preset post-winding position, or the user inputs the preset heating start angle θ1 and heating end angle θ2 of the closed-pore portion to the position information determination unit 81.

The winding control unit 82 is configured to control the winding mechanism 4 to wind the cathode plate 2, the anode plate 1, and the first separator 31 and the second separator 32 that have not been heated.

The obtaining unit 83 obtains the overall winding angle θ of the cathode plate 2, the first separator 31, the second separator 32, and the anode plate 1, and sends the overall winding angle to the heating information determination unit 84.

In some embodiments, the heating information determination unit 84 being configured to determine heating information based on the winding data and the position information of the preset part includes: the heating information determination unit 84 determines the heating start signal and the heating end signal based on the overall winding angle θ of the cathode plate, the separator, and the anode plate, the heating start angle θ1, and the heating end angle θ2.

The temperature sensor 86 is configured to measure a temperature of the heating mechanism 5, and send the measured temperature to the heating control unit 85.

The heating control unit 85 heats the separator based on the heating start signal and the heating end signal and the temperature measured by the temperature sensor 86 to form the closed-pore portion in the preset post-winding position. The heating control unit 85 controls a heating temperature of the heating mechanism 5 based on a temperature measured by the temperature sensor 86, and controls the heating temperature to be within a predetermined temperature range to ensure a pore closing effect of the closed-pore portion. In this embodiment, for a specific method, reference may be made to the specific method corresponding to the method claims.

In some embodiments, the preset post-winding position is on one surface or two surfaces of the first separator 31 and/or the second separator 32.

The preset post-winding position being either on one surface or two surfaces of the first separator 31 and/or the second separator 32 can enable some ions to be blocked and reduce the occurrence of lithium precipitation. The preset post-winding position may be a position of the electrode assembly after winding where lithium precipitation is prone to occur. Forming a closed-pore portion in the preset post-winding position can prevent the ions blocked by the closed-pore portion from being intercalated into an anode active material layer adjacent to a cathode active material layer, thereby reducing the occurrence of lithium precipitation in the part of the anode plate where lithium precipitation is prone to occur, improving the safety performance of the battery cell, and prolonging the service life of the battery cell.

In some embodiments, the cathode plate 2, the first separator 31, the second separator 32, and the anode plate 1 are wound to form a first bent region B1 and a second bent region B2. At least part of a preset post-winding position is provided in the bent regions B1 and B2 along a surface of at least one of the cathode plate 2, the anode plate 1, or the first separator 31 and the second separator 32.

In some embodiments, at least part of the preset post-winding position is provided at the bent part of the first separator 31 and the second separator 32 adjacent to the first-bent part 21 of the cathode plate 2 and/or at the bent part of the first separator 31 and the second separator 32 adjacent to the second-bent part 22, and/or at least part of the preset post-winding position is provided at the bent part of the first separator 31 and the second separator 32 adjacent to the first-bent part 11 of the anode plate 1 and/or at the bent part of the first separator 31 and the second separator 32 adjacent to the second-bent part 12.

In this embodiment, a manner of providing the preset post-winding position may be a provision manner in the foregoing method embodiments, and for details, reference may be made to the embodiments in Figs. 3 to 5.

The processing apparatus of this embodiment is described below in detail with reference to the accompanying drawings.

FIG. 11 shows a processing apparatus 111 according to an embodiment. The processing apparatus 111 includes a winding mechanism 4 and a heating mechanism 51. The winding mechanism 4 is configured to wind an anode plate 1, a first separator 31, a second separator 32, and a cathode plate 2 to form an electrode assembly. The heating mechanism 51 is located upstream of the winding mechanism; and is configured to heat the preset part of the first separator 31 and the second separator 32 to form the closed-pore portion. In this embodiment, the heating mechanism 51 is arranged at both the first separator 31 and the second separator 32, but this is not limited, and the heating mechanism 51 may be arranged only at the first separator 31 or the second separator 32.

In some embodiments, the processing apparatus 111 further includes a plurality of passing rollers 6, which are respectively arranged at the anode plate 1, the first separator 31, the cathode plate 2, and the second separator 32 to tension the anode plate 1, the first separator 31, the cathode plate 2, and the second separator 32.

In some embodiments, the winding mechanism 4 is a winding needle, and a winding direction of the winding mechanism 4 is an R1 direction. The overall winding angle θ of the cathode plate, the separator, and the anode plate in the foregoing embodiment is a winding angle of the winding mechanism 4.

As shown in FIG. 12, in some embodiments, the heating mechanism 51 is configured to heat the preset part of a surface of the separator to form the closed-pore portion. The heating mechanism 51 includes: a heating portion 511 configured to heat the preset part of the surface of the separator; and a driving mechanism 512 configured to drive the heating portion to press against or leave the surface of the separator, where the driving mechanism 512 is communicatively connected to the heating control unit 85.

In some embodiments, the heating portion 511 includes a heating roller 5111, and a heating layer 5112 is provided in a circumferential direction of the heating roller 5111. The heating layer 5112 is in communication with the temperature sensor 86 and the heating control unit 85, and the temperature sensor 86 measures a temperature of the heating layer 5112, and sends the temperature to the heating control unit 85. The heating control unit 85 controls an actual temperature of the heating layer 5112 based on the temperature measured by the temperature sensor 86, and controls the temperature of the heating layer 5112 to be within a predetermined temperature range, to ensure a pore closing effect of the separator. The heating roller 5111 is rotatably connected to the driving mechanism. When the heating portion is driven by the driving mechanism 512 to approach the surface of the separator and roll along the surface of the separator, the surface of the separator is heated to form a closed-pore portion. After the heating is completed, the heating portion 511 is driven by the driving mechanism 512 to leave the surface of the separator, and the heating is ended.

In some embodiments, the driving mechanism 512 includes a driving unit 5122 and a swing arm 5121, and the driving unit 5122 is connected to one end of the swing arm, to drive the swing arm 5121 to swing in an R2 direction. The driving unit may be any mechanism adapted to drive the swing arm 5121 to swing, for example, may be an electrode plus a gear set, or a motor plus an eccentric wheel, or another structure. One end of the swing arm 5121 is rotatably connected to the driving unit, and the other end is rotatably connected to the heating roller 5111. The swing arm 5121 is driven by the driving unit 5122 to drive the heating portion 511 to move.

The driving mechanism 512 includes two groups of swing arms 5121 and heating portions 511, the separator passes through the middle of the two groups of swing arms 5121 and the heating portion 511, and the two surfaces of the separator each correspond to one group of swing arm 5121 and heating portion 511. The two groups of swing arms 5121 and heating portions 511 may be driven by one driving unit 5122, or may be driven by two driving units 5122 separately. Swing directions of the two groups of swing arms 5121 and heating portions 511 are opposite to each other, that is, the two groups of swing arms 5121 approach or move away from the separator at the same time. When one surface of the separator needs to be heated, a corresponding heating portion 511 on a surface on one side to be heated may be heated, while a corresponding heating portion 511 on a surface on the other side is not heated, and only acts as a support during heating to support the heating portion 511 on the other side that is heated, such that pore closing occurs on the surface on the side of the separator. When two surfaces of the separator need to be heated, the corresponding heating portions 511 on surfaces on two sides of the separator may be heated. The two heating portions 511 support each other and simultaneously heat the two surfaces of the separator, such that pore closing occurs on the two surfaces of the separator. The selection of heating a surface on one side and surfaces on two sides of the separator can be implemented by adjusting whether the two heating portions perform heating and adjusting a heating temperature.

In addition, the heating mechanism 51 may be provided on one or more of the first separator 31 and/or the second separator 32 to meet the heating requirements for different separators.

As shown in FIG. 13, in the processing apparatus in another embodiment of the present application, a difference from the embodiment of FIG. 11 lies in a structure of the heating mechanism 52.

As shown in FIG. 14, an embodiment of the heating mechanism 52 is shown, and the heating mechanism 52 also includes a heating portion 522 and a driving mechanism 521. The heating portion 522 and the driving mechanism 521 of the heating mechanism have different structures from the heating portion 511 and the driving mechanism 512 in FIG. 27. A heating layer is provided on one side of the heating portion 522 facing the separator, and the heating portion 522 is driven by the driving mechanism 521 to approach or leave the surface of the separator. However, the heating portion does not rotate. When the heating portion 522 approaches the surface of the heating element, the heating layer heats the surface of the separator to form closed pores.

In this embodiment, the driving mechanism 521 may be a pneumatic cylinder, an oil cylinder, a screw-nut mechanism, etc.

In this embodiment, the heating mechanism further includes a support 523. The support 523, and the heating portion 522 and the driving mechanism 521 are respectively arranged on two sides of the separator, and the support 523 is configured to support the heating portion 521 on the other side, such that the separator can be uniformly heated to achieve a good pore closing effect.

As shown in FIG. 15, the heating mechanism 52 includes two groups of heating portions 522 and driving mechanisms 521. The two groups of heating portions 522 and driving mechanisms 521 are respectively arranged on two sides of the separator, and the two heating portions 522 may approach or move away from the separator at the same time. The two heating portions 521 support each other and simultaneously heat the two surfaces of the separator, such that the two surfaces of the separator are heated uniformly and consistently, thereby achieving a better pore closing effect. The selection of heating a surface on one side and surfaces on two sides of the separator can be implemented by adjusting whether the two heating portions perform heating and adjusting a heating temperature.

In addition, the heating mechanism 52 may be provided on one or more of the first separator 31 and/or the second separator 32 to meet the heating requirements for different separators.

FIG. 16 shows a schematic structural diagram of a battery cell according to another embodiment of the present application. The battery cell includes a housing 181 and one or more electrode assemblies 182 accommodated in the housing 181. The housing 181 includes a shell 1811 and a cover plate 1812. The shell 1811 has an accommodating cavity, and the shell 1811 has an opening, that is, there is no shell wall on this flat surface, and the interior of the shell 1811 is in communication with the outside, so that the electrode assemblies 182 can be accommodated in the accommodating cavity of the shell 1811. The cover plate 1812 is combined with the shell 1811 at the opening of the shell 1811 to form a hollow cavity. After the electrode assemblies 182 are accommodated in the housing 181, the housing 181 is filled with an electrolyte and then sealed.

The shell 1811 is shaped according to the shape of one or more electrode assemblies 182 after combination. For example, the shell 1811 may be a hollow cuboid, a hollow cube, or a hollow cylinder. For example, when the shell 1811 is a hollow cuboid or cube, one of the flat surfaces of the shell 1811 is a flat surface where an opening is located, that is, there is no shell wall on this flat surface, and the interior of the shell 1811 is in communication with the outside; and when the shell 1811 is a hollow cylinder, one of the circular side surfaces of the shell 1811 is a surface where an opening is located, that is, there is no shell wall on this circular side surface, and the interior of the shell 1811 is in communication with the outside.

In another embodiment of the present application, the shell 1811 may be made of an electrically conductive metal or plastic, and optionally, the shell 1811 is made of aluminum or aluminum alloy.

For the structure of the electrode assembly 182, reference may be made to the related content of the electrode assembly described in the forgoing embodiments of Figs. 1 to 28, and details are not described herein again.

As shown in FIG. 17, it is a schematic structural diagram of a battery module according to another embodiment of the present application. The battery module 19 includes a plurality of battery cells 191 connected to each other, where the plurality of battery cells 191 may be in series connection, in parallel connection or in series-parallel connection. The series-parallel connection means that the connection includes both series connection and parallel connection. The structure of the battery cell 191 may refer to the battery cell described in the embodiment corresponding to FIG. 29, which will not be described in detail herein. FIG. 18 is a schematic structural diagram of a battery according to another embodiment of the present application. The battery includes a case, with a plurality of battery cells received in the case. For the structure of the battery cell, reference may be made to the structure of the battery cell shown in FIG. 29. A manner of accommodating the plurality of battery cells in the case may include: directly mounting the battery cells in the case, or assembling a plurality of battery cells into a battery module and then mounting the battery module in the battery.

As shown in FIG. 18, in some embodiments, the battery includes a plurality of battery modules 19 and a case. The case includes a lower case 20 and an upper case 30. The plurality of battery modules 19 may be in series connection or in parallel connection or in series-parallel connection. The lower case 20 has an accommodating cavity, and the lower case 20 has an opening, so that the plurality of battery modules 19 after being connected can be accommodated in the accommodating cavity of the lower case 20. The upper case 30 and the lower case 20 are combined at the opening of the lower case 20 to form a hollow cavity, and the upper case 30 and the lower case 20 are combined and then sealed. In another embodiment of the present application, the battery may supply power to a power consuming apparatus alone. The battery may be referred to as a battery pack, for example, for supplying power to a vehicle.

In another embodiment of the present application, depending on power requirements of the power consuming apparatus, a plurality of batteries are connected to each other and then combined into a battery bank for supplying power to the power consuming apparatus. In another embodiment of the present application, the battery bank may also be accommodated in one case and packaged.

For the sake of brevity, the following embodiment is described by taking a power consuming apparatus that includes a battery as an example.

An embodiment of the present application further provides a power consuming apparatus which, for example, may be a vehicle, for example, a new-energy vehicle. The power consuming apparatus includes a battery described in the foregoing embodiment, where the battery used by the power consuming apparatus may be a battery as described in the embodiment corresponding to FIG. 31, and details are not described herein again.

For example, FIG. 19 is a schematic structural diagram of a power consuming apparatus according to another embodiment of the present application. The power consuming apparatus may be a vehicle, which may be a fuel vehicle, a gas vehicle, or a new-energy vehicle. The new-energy vehicle may be a battery electric vehicle, a hybrid vehicle, an extended-range vehicle, etc. The vehicle includes a battery 2101, a controller 2102, and a motor 2103. The battery 2101 is configured to supply power to the controller 2102 and the motor 2103 as an operating power supply and a driving power supply of the vehicle. For example, the battery 2101 is used for meeting the working power requirements of the vehicle during starting, navigating, and running. For example, the battery 2101 supplies power to the controller 2102, the controller 2102 controls the battery 2101 to supply power to the motor 2103, and the motor 2103 receives and uses the power from the battery 2101 as the driving power of the vehicle, replacing or partially replacing the driving power provided by the fuel or natural gas for the vehicle.

Those skilled in the art should understand that, although some of the embodiments described herein include some but not other features included in other embodiments, combinations of the features of different embodiments means that they are within the scope of the present application and form different embodiments. For example, in the claims, any one of the embodiments set forth thereby can be used in any combination.

The foregoing embodiments are merely used for illustrating rather than limiting the technical solutions of the present application. Although the present application has been illustrated in detail with reference to the foregoing embodiments, it should be understood by those of ordinary skill in the art that the technical solutions recorded in the foregoing embodiments may still be modified, or some of the technical features thereof may be equivalently substituted; and these modifications or substitutions do not make the essence of the corresponding technical solution depart from the spirit and scope of the technical solutions of the embodiments of the present application.

## Claims

1. An electrode assembly, comprising:
a cathode plate, an anode plate, and a separator, wherein the separator is configured to separate the cathode plate from the anode plate; and
a closed-pore portion is provided in part of the region of the separator, and the closed-pore portion is configured to block at least some ions de-intercalated from the cathode plate located on one side of the closed-pore portion from being intercalated into the anode plate located on the other side of the closed-pore portion.

2. The electrode assembly according to claim 1, wherein the closed-pore portion is formed by heating the part of region of the separator.

3. The electrode assembly according to claim 1 or 2, wherein the cathode plate, the separator, and the anode plate are wound to form a bent region, and at least part of the closed-pore portion is provided on the separator in the bent region.

4. The electrode assembly according to claim 3, wherein at least part of the closed-pore portion is provided at a bent part of the separator that is adjacent to a first-bent part of the cathode plate, and/or at least part of the closed-pore portion is provided at a bent part of the separator that is adjacent to a second-bent part of the cathode plate.

5. A processing method for an electrode assembly, the electrode assembly comprising a cathode plate, an anode plate, and a separator, wherein the separator is configured to separate the cathode plate from the anode plate; the electrode assembly is formed by winding the cathode plate, the separator, and the anode plate; and wherein the method comprises:
heating a preset part of the separator to form a closed-pore portion at the preset part; and
winding the cathode plate, the anode plate, and the separator to form the electrode assembly,
wherein the closed-pore portion is located between the cathode plate and the anode plate adjacent to each other after the winding, and the closed-pore portion is configured to block at least some ions de-intercalated from the cathode plate located on one side of the closed-pore portion from being intercalated into the anode plate located on the other side of the closed-pore portion.

6. The processing method according to claim 5, wherein before the step of heating a preset part of the separator, the method further comprises:
determining position information of the preset part based on a preset post-winding position, wherein the preset post-winding position is a position of the closed-pore portion in the electrode assembly after the winding, and is located between the cathode plate and the anode plate adjacent to each other, and the position information of the preset part comprises information for characterizing a start position and an end position of the closed-pore portion;
winding the cathode plate, the anode plate, and the separator that has not been heated;
obtaining winding data of the cathode plate, the separator, and the anode plate, and determining heating information based on the winding data and the position information of the preset part; and
obtaining a heating temperature for heating the preset part of the separator; and
then the heating a preset part of the separator comprises: heating the preset part of the separator based on the heating information and the heating temperature.

7. The processing method according to claim 6, wherein the winding data comprises a winding linear velocity of the separator,
the position information of the preset part comprises a start point length and an end point length of the closed-pore portion, and
the heating information comprises a heating start time and a heating end time.

8. The processing method according to claim 6, wherein the winding data comprises an overall winding angle θ of the cathode plate, the separator, and the anode plate,
the position information of the preset part comprises a start angle θ1 and an end angle θ2 of the closed-pore portion, and
the heating information comprises a heating start signal and a heating end signal.

9. The processing method according to any one of claims 6 to 8, wherein the cathode plate, the separator, and the anode plate are wound to form a bent region, and at least part of the preset post-winding position is provided on the separator in the bent region.

10. The processing method according to claim 9, wherein at least part of the preset post-winding position is provided at a bent part of the separator that is adjacent to a first-bent part of the cathode plate, and/or at least part of the preset post-winding position is provided at a bent part of the separator that is adjacent to a second-bent part of the cathode plate.

11. The processing method according to any one of claims 6 to 10, wherein the heating temperature for heating the preset part of the separator ranges from 90 degrees Celsius to 115 degrees Celsius.

12. A processing apparatus for an electrode assembly, the electrode assembly comprising a cathode plate, an anode plate, and a separator, wherein the separator is configured to separate the cathode plate from the anode plate; the electrode assembly is formed by winding the cathode plate, the separator, and the anode plate; and wherein the apparatus comprises:
a heating mechanism configured to heat a preset part of the separator to form a closed-pore portion; and
a winding mechanism configured to wind the cathode plate, the anode plate, and the separator to form the electrode assembly, the heating mechanism being located upstream of the winding mechanism,
wherein the closed-pore portion is located between the cathode plate and the anode plate adjacent to each other after the winding, and the closed-pore portion is configured to block at least some ions de-intercalated from the cathode plate located on one side of the closed-pore portion from being intercalated into the anode plate located on the other side of the closed-pore portion.

13. The processing apparatus according to claim 12, further comprising:
a position information determination unit configured to determine position information of the preset part based on a preset post-winding position, and send the position information to a heating information determination unit, wherein the preset post-winding position is a position of the closed-pore portion in the electrode assembly after the winding, and is located between the cathode plate and the anode plate adjacent to each other, and the position information of the preset part comprises information for characterizing a start position and an end position of the closed-pore portion;
a winding control unit configured to control the winding mechanism to wind the cathode plate, the anode plate, and the separator;
an obtaining unit configured to obtain winding data of the cathode plate, the separator, and the anode plate, and send the winding data to the heating information determination unit;
the heating information determination unit configured to determine heating information based on the winding data and the position information of the preset part;
a temperature sensor configured to measure a temperature of the heating mechanism, and send the measured temperature to a heating control unit; and
the heating control unit configured to control, based on the heating information and the measured temperature, the heating mechanism to heat the preset part of the separator to form the closed-pore portion.

14. The processing apparatus according to claim 13, wherein the winding data comprises a winding linear velocity V of the separator,
the position information of the preset part comprises a start point length L1 and an end point length L2 of the closed-pore portion, and
the heating information comprises a heating start time T1 and a heating end time T2.

15. The processing apparatus according to claim 13, wherein the winding data comprises an overall winding angle θ of the cathode plate, the separator, and the anode plate,
the position information of the preset part comprises a heating start angle θ1 and a heating end angle θ2 of the closed-pore portion, and
the heating information comprises a heating start signal and a heating end signal.

16. The processing apparatus according to any one of claims 13 to 15, wherein the cathode plate, the separator, and the anode plate are wound to form a bent region, and at least part of the preset post-winding position is provided on the separator in the bent region.

17. The processing apparatus according to claim 16, wherein at least part of the preset post-winding position is provided at a bent part of the separator that is adjacent to a first-bent part of the cathode plate, and/or at least part of the preset post-winding position is provided at a bent part of the separator that is adjacent to a second-bent part of the cathode plate.

18. The processing apparatus according to any one of claims 11 to 17, wherein
the heating mechanism comprises:
a heating portion configured to heat the preset part of a surface of the separator to form the closed-pore portion; and
a driving mechanism configured to drive the heating portion to approach or leave the separator, wherein
the heating portion and the driving mechanism are communicatively connected to the heating control unit.

19. The processing apparatus according to claim 18, wherein the heating portion is arranged on one side of the separator, or
there are a plurality of the heating portions, which are respectively arranged on two sides of the separator.

20. The processing apparatus according to claim 18, wherein
the heating portion comprises a heating roller, and the heating roller is rotatably connected to the driving mechanism.

21. The processing apparatus according to any one of claims 12 to 20, wherein a heating temperature of the heating mechanism ranges from 90 degrees Celsius to 115 degrees Celsius.

22. A battery cell, comprising: a shell, a cover plate, and at least one electrode assembly according to any one of claims 1 to 4, wherein
the shell has an accommodating cavity and an opening, and the electrode assembly is accommodated in the accommodating cavity; and
the cover plate is configured to seal the opening of the shell.

23. A battery, comprising a case and at least one battery cell according to claim 22, wherein the battery cell is accommodated in the case.

24. A power consuming apparatus, configured to receive power provided by a battery according to claim 23.
